Europäisches Patentamt

European Patent Office

Office européen des brevets

(11) Publication number: **0 109 149**
**A1**

(12) # EUROPEAN PATENT APPLICATION

(21) Application number: 83305369.7

(22) Date of filing: 14.09.83

(51) Int. Cl.³: **G 02 B 5/16**

(30) Priority: 15.10.82 GB 8229562

(43) Date of publication of application: 23.05.84
Bulletin 84/21

(84) Designated Contracting States: **DE FR IT**

(71) Applicant: **STANDARD TELEPHONES AND CABLES PUBLIC LIMITED COMPANY, 190 Strand, London, WC2R 1DU (GB)**

(72) Inventor: **Parfree, Colin Stanly, 50 Languard Road, Shirley Southampton S01 5DN (GB)**
Inventor: **Taylor, Kenneth, 14 Springfields, Great Dunmow Essex (GB)**
Inventor: **Jones, Philip Andrew, Woodham House, Much Hadham Hertfordshire (GB)**

(74) Representative: **Laurence, Simon French, S.T.C. Patent Department Edinburgh Way, Harlow Essex CM20 2SH (GB)**

(54) Telecommunications cables manufacture.

(57) The transmission package (11–13) of a telecommunications cable, typically a submarine optical fibre cable, is provided with mechanical protection by an aluminium friction extruded seamless tube (16) extruded directly around the transmission package. To avoid subjecting the package directly to the temperatures present in the extrusion process the tube (16) is extruded as a loose fit tube which is immediately cooled before being shrunk down on to the package.

EP 0 109 149 A1

## TELECOMMUNICATIONS CABLE MANUFACTURE

This invention relates to telecommunications cables, and in particular, though not exclusively, to optical fibre submarine cables.

The transmission package of an optical fibre cable typically consists of a number of glass optical fibres each having a silicone plastics primary coating and a thicker secondary coating of extruded plastics material. It is generally desirable to protect this package from mechanical strain, from the ingress of water, and in the case of submarine cable from substantial hydrostatic pressure as each one of these factors is liable to induce significantly enhanced optical attenuation in an optical fibre by opening microcracks in the glass. The ingress of water can also lead to a deterioration in the performance of a coaxial construction of metallic conductor cable by virtue of its absorption into the dielectric spacing the outer conductor from the inner.

One way of preventing the ingress of water is to encase the transmission package in a longitudinal wrapping of metallic tape whose sides are wrapped around the package, butted together, and welded with a continuous longitudinal weld.

One known construction of optical fibre cable for submarine use which adopts this technique has one or more optical fibres located within a tubular electrical conductor, over which there is a cylindrical strain member consisting for instance, of one or more layers of stranded steel wires. Over the strain member is formed an electrically conductive tube consisting of longitudinally wrapped copper tape whose abutting edges have been welded together to provide hermeticity. The tubular electrical conductor surrounding the optical fibres may consist of a friction extruded C-section aluminium tube whose jaws have been closed around the optical fibres in the manner disclosed in U.K. Patent Application No. 2105483A. To complete the cable construction a dielectric layer is extruded over the copper tube and further sheathing or armouring is applied, if required, depending upon the individual use for the cable. In this construction the closed C-section tube protects the fibre package from mechanical strain and hydrostatic pressure.

A modification of this design is described in Patent Application No. 2101505A, in which a friction extruded seamless tube is substituted for the copper tube in order to provide a more reliable hermetic seal for the prevention of the ingress of water.

The present invention discloses a cable structure in which a seamless friction extruded tube is extruded as a loose tube directly around the transmission package. The continuous friction extrusion process avoids the stop/start problems inherent in discontinuous extrusion processes, such as billet extrusion, and enables long lengths to be extruded with substantially constant properties.

According to the present invention there is provided a method of manufacturing a telecommunications cable, which method is characterised in that a seamless metal tube is friction extruded around the transmission package of the cable as a loose fit tube, and that the emergent tube is cooled to prevent its heat from damaging the transmission package.

In the case of the modified design of optical fibre cable referred to previously, this invention involves an additional modification that simplifies the manufacturing process by dispensing entirely with the processing concerned with the provision of the C-section tube and the closing of its jaws. The place of the C-section tube is instead taken by the seamless friction extruded tube.

The extrusion of a tube of aluminium by friction extrusion typically involves a temperature in the region of $400^{o}C$ to achieve the requisite flow. This is too high a temperature to be sustained by most, if not all, plastics materials, and so the tube is extruded as a loose tube, which is not allowed to come into contact with the package until it has been adequately cooled after leaving the extruder tooling. The mandrel used for extruding the tube has a through hole permitting the transmission package to pass freely through it, and this mandrel serves also to isolate the package from the high pressures existing in the extruder which are typically of the order of 850 $MN/m^{2}$. Clearly the package will be heated by convection from the surrounding tube, while that tube is being cooled, and it will also be heated by the mandrel as it passes through its through hole, but at a typical line speed of 30 m/min the package will not attain anything like the extrusion temperature due to thermal transfer effect limitations. A reduced line speed will have greater effect upon the heating by the mandrel than the heating by the extruded tube, because the package will receive more heat from the mandrel as a result of its increased dwell time within the mandrel, whereas the cooling of the extruded tube will take place at approximately the same rate. However, an additional protection against overheating of the package can be achieved by pre-chilling it to the lowest acceptable temperature immediately prior to its entry into the extrusion tooling, thus leaving a wider margin before its temperature rises to its maximum acceptable value.

There follows a description of the manufacture of a submarine optical fibre cable embodying the invention in a preferred form. The description refers to the accompanying drawings in which :-

Figure 1 depicts a schematic cross-section of the cable, at a stage of manufacture after friction extrusion of a tube surrounding its transmission package and before that tube has been shrunk down on to the package,

Figure 2 depicts a schematic cross-section of the completed cable, and

Figure 3 depicts schematically the apparatus used for making the cable.

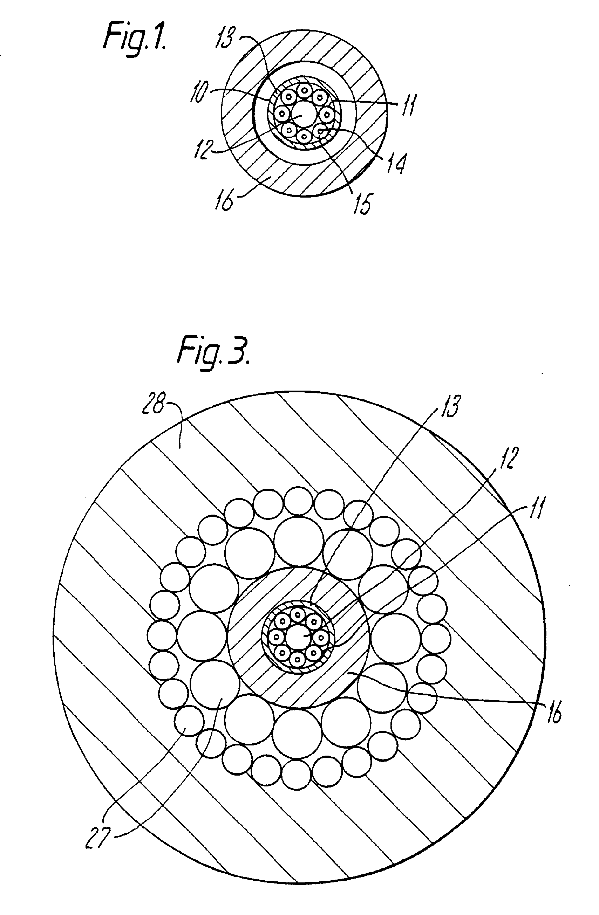

The transmission package of an optical fibre submarine cable is depicted generally at 10 in Figure 1, and consists of a set of plastics packaged optical fibres 11 stranded around a king wire 12, and optionally held together as a bundle by means of a tape wrapping 13, for instance of polyester plastics material. Each fibre package 11 has at its core a glass fibre 14, typically made of silica, having an internal optical waveguiding structure. The glass core is surrounded by plastics material 15 provided in one or more layers to give a measure of protection for the underlying glass surface and to provide sufficient robustness for the stranding operation.

In some cable constructions the king wire 12 may itself be a packaged optical fibre similar to, or identical with, the packaged optical fibres 11. Around this transmission package 10 is extruded a loose-fitting seamless aluminium tube 16 which is provided by continuous friction extrusion.

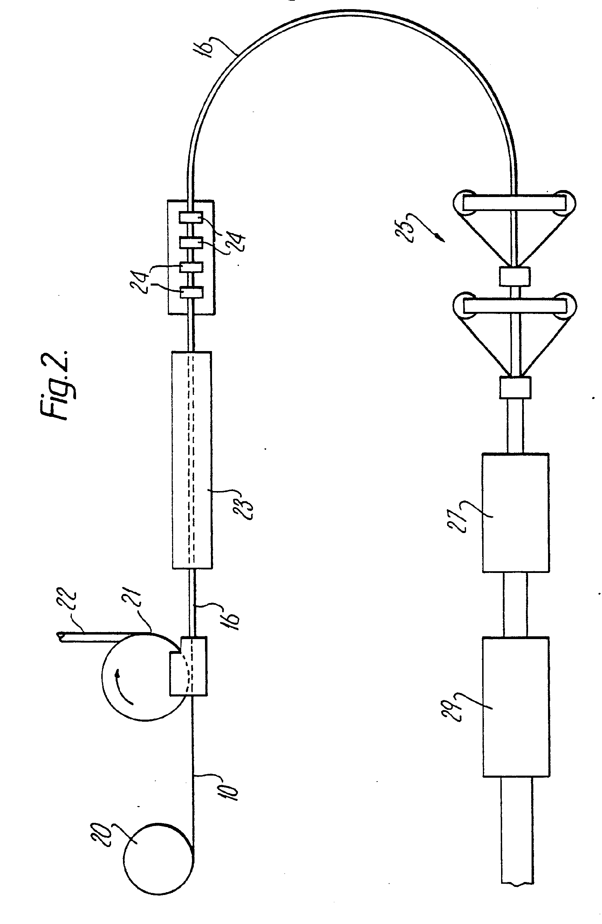

Referring now more particularly to Figures 2 and 3, the transmission package 10 is paid-off under tension from a supply reel 20 and fed through the tooling of a friction extruder 21. This extruder is fed with aluminium stock 22 which the extruder forms into the loose-fitting seamless tube 16 surrounding the transmission package.

The tube 16 is initially extruded in an oversize form so that it is a loose fit and not in intimate contact with the transmission package 10. Thus the package 10 is not subjected to the high temperatures and high pressures inherent in the friction extrusion process.

The tube 16 is cooled in a water-trough 23 immediately after emerging from the extruder 21. Back-tension on the transmission package prevents it from coming to rest against the inner wall of the tube until it has been sufficiently cooled. The next process step is optional and consists of shrinking the tube down on to the transmission package. This is effected by a series of dies 24. Typically, having regard to such factors as work-hardening, the amount of draw-down produced by these dies is limited to producing about a 25% decrease in the overall cross-sectional area of the tube.

The emergent tube, now shrunk on to its transmission package, is then fed through a strander 25 which applies a strength member consisting of one or more layers of stranded steel wires 26 (Figure 3). Typically, though not necessarily, two layers are applied which are stranded with oppositely directed layers in order to provide a measure of torque balance. Then the cable is passed through one or more extruders 27 which apply plastics sheathing 28 (Figure 3). Optionally the cable emerging from the extruder(s) 27 may be provided with armouring (not shown in Figure 3) from an armouring machine 29.

CLAIMS :

1.      A method of manufacturing a telecommunications cable, which method is characterised in that a seamless metal tube is friction extruded around the transmission package of the cable as a loose fit tube, and that the emergent tube is cooled to prevent its heat from damaging the transmission package.

2.      A method as claimed in claim 1, wherein after the tube has been cooled to a temperature that can be tolerated by the package it is shrunk into contact with the transmission package.

3.      A method as claimed in claim 1 or 2, wherein the transmission package is pre-chilled prior to entry into the friction extruder tooling.

4.      A telecommunications cable made by the method claimed in any preceding claim.

5.      A cable as claimed in claim 4, wherein the transmission package consists of or includes one or more optical fibres.

6.      A cable as claimed in claim 5, wherein the or each optical fibre is a glass optical fibre encased in one or more plastics protective coatings.

Fig.1.

13
10
12
16
11
14
15

Fig.3.

28
13
12
11
16
27

Fig.2.

2/2

0109149

# 0109149

European Patent Office

**EUROPEAN SEARCH REPORT**

Application number

EP 83 30 5369

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 052 092 (LES CABLES DE LYON) <br> * Page 1, lines 92-98 * | 1,2 | G 02 B 5/16 |
| A | GB-A-1 523 433 (DELTA ENFIELD CABLES LTD.) <br> * Figure 3; page 1, lines 17-35 * | 1 | |
| A | DE-A-1 490 701 (SIEMENS AG) <br> * Claim 1 * | 1 | |
| A | US-A-4 317 003 (S.J. GRAY) <br> * Figure 3; column 5, lines 33-41 * | 2,5 | |
| A | FR-A-2 388 931 (LIGNES TELEGRAPHIQUES ET TELEPHONIQUES) <br> * Claim 1 * | | |

**TECHNICAL FIELDS SEARCHED (Int. Cl. ³)**

G 02 B 5/16
H 01 B 13/24

The present search report has been drawn up for all claims

| Place of search <br> BERLIN | Date of completion of the search <br> 06-01-1984 | Examiner <br> FUCHS R |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82